# EUROPÄISCHE PATENTSCHRIFT

(11) **EP 2 064 013 B1**
(45) Veröffentlichungstag und Bekanntmachung des Hinweises auf die Patenterteilung: **11.10.2017**
(21) Anmeldenummer: 07803108.5
(22) Anmeldetag: 31.08.2007
(51) Int. Cl.: B23B 51/04, B23B 27/14

(54) **WENDESCHNEIDPLATTE SOWIE VERWENDUNG DER WENDESCHNEIDPLATTE IN EINEM VOLLBOHRER**
INDEXABLE INSERT AND USE OF THE INDEXABLE INSERT IN A SOLID DRILL
PLAQUETTE AMOVIBLE ET UTILISATION DE LA PLAQUETTE AMOVIBLE DANS UN FORET PLEIN DIAMÈTRE

(30) Priorität: 19.09.2006 DE 102006044605
(43) Veröffentlichungstag der Anmeldung: 03.06.2009
(73) Patentinhaber: Komet Group GmbH, 74354 Besigheim (DE)
(72) Erfinder: KRUSZYNSKI, Jacek, 70190 Stuttgart (DE); KRETZSCHMANN, Uwe, 74354 Besigheim (DE); NITZSCHE, Hendrik, 71726 Benningen (DE); SCHÜTT, Henry, 74343 Sachsenheim (DE)
(74) Vertreter: Wolf, Eckhard
(86) Internationale Anmeldenummer: PCT/EP2007/059108
(87) Internationale Veröffentlichungsnummer: WO 2008/034707

(56) Entgegenhaltungen:
- EP-A- 0 373 292
- EP-A- 0 582 222
- WO-A-00/50192
- WO-A-93/11898
- WO-A-94/16848
- WO-A-96/30149
- DE-A1- 2 850 026
- JP-A- 9 290 312
- US-A- 4 659 264
- US-A- 5 720 583

## Beschreibung

Die Erfindung betrifft eine Wendeschneidplatte für Vollbohrer mit einem Stützboden, mit vier über den Stützboden überstehenden seitlichen Stützflächen und mit vier gleichartigen, in einem Höhenabstand über dem Stützboden angeordneten, sich zwischen je zwei Schneidenecken erstreckenden Schneidkanten, die durch je eine Spanfläche und eine Freifläche begrenzt sind und von denen sich beim Bohrvorgang jeweils eine in einer aktiven Einsatzposition befindet, wobei die Freifläche in jedem Punkt der zugehörigen Schneidkante mit einer zum Stützboden senkrechten Geraden einen Freiwinkel einschließt, wobei der Freiwinkel entlang der Schneidkante variiert.

Bohrwerkzeuge mit mindestens zwei im Wesentlichen quadratischen Wendeschneidplatten dieser Art sind bekannt (DE-100 21 879 A1, DE-102 35 606 A1). Die quadratischen Schneidplatten sind dort in unterschiedlichen radialen Abständen voneinander in einem Grundkörper angeordnet. Sie stehen mit ihren stirnseitigen aktiven Schneiden mit positivem Spanwinkel axial über den Bohrerkörper über. Üblicherweise ist in axialer Richtung die innere Platte vorschneidend, wobei der Abstand etwa dem Krümmungsradius im Bereich der Schneidenecken entspricht. Die Bohrerachse kann von der aktiven Hauptschneide der innersten Wendeschneidplatte überragt werden, so dass Vorkehrungen getroffen werden müssen, um eine Überlastung der Schneidenecke zu vermeiden. Es ist zwar bekannt, die Anstellung der Wendeschneidplatten im Grundkörper sowie deren Umfangskontur zu variieren, um auf den Schneidvorgang und die Spanbildung Einfluss zu nehmen. Allerdings sind diesen Vorkehrungen Grenzen gesetzt, da die Vierersymmetrie der Platte im Schneidkantenbereich gestalterische Einschränkungen erfordert und da der Plattensitz zur Erzielung einer ausreichenden Einspanngenauigkeit nur relativ einfache Umrissformen erlaubt.

Andererseits treten beim Bohrvorgang mit Vollbohrern dieser Art aufgrund der geometrischen Verhältnisse von innen nach außen unterschiedliche Schnittgeschwindigkeiten auf, die zu einem variablen Verschleiß entlang der aktiven Schneidkanten der bekannten Wendeschneidplatten führen. Außerdem ergeben sich bei der Verwendung quadratischer Wendeschneidplatten im Unterschied zu den bekannten Trigon-Schneidplatten mit Pfeilschneide vor allem beim Anbohrvorgang Probleme bei der Zentrierung des Bohrers, die mit den bisherigen Maßnahmen noch nicht befriedigend gelöst werden konnten.

Weiter ist es bei Wendeschneidplatten für Bohr- und Fräswerkzeuge der eingangs angegebenen Art an sich bekannt (US 5,720,583), dass der Freiwinkel der Hauptschneidkante zumindest im Eckbereich kleiner als der Freiwinkel einer Planschneidkante ist. Die US 5,720,583 offenbart eine Wendeschneidplatte, die die Merkmale des Oberbegriffs des unabhängigen Anspruchs 1 umfasst. Ausgehend hiervon liegt der Erfindung die Aufgabe zugrunde, eine aus einer quadratischen Wendeschneidplatte abgeleitete viereckige Wendeschneidplatte zu entwickeln, mit der sowohl die Schneideigenschaften als auch das Zentrier- und Verschleißverhalten von Vollbohrern verbessert werden können.

Zur Lösung dieser Aufgabe wird die im Patentanspruch 1 angegebenen Merkmalskombination vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, dass durch eine Variation der Schneidengeometrie entlang den Schneidkanten zusätzliche Parameter zur Optimierung der Schneideigenschaften zur Verfügung stehen. Dies gilt erfindungsgemäß für den Parameter des Freiwinkels, der entweder einzeln oder gemeinsam mit der von der Ebene des Stützbodens gemessenen Höhe der vier Schneidkanten über die Länge der Schneidkanten unter Optimierung der lokalen Schneideigenschaften variiert werden kann. Gemäß der Erfindung kann eine Festigkeitserhöhung im Schneideneckenbereich bei gleichzeitiger Verbesserung der Schneideigenschaften im Bereich höherer Schnittgeschwindigkeiten beim Bohrvorgang dadurch erzielt werden, dass der Freiwinkel von einem kleineren Wert, der z. B. 5° ist, in der Nähe der Schneidenecke bis zu einem Maximalwert, der z. B. 11 ist, ansteigt und im weiteren Verlauf der Schneidkante bis zur anderen Schneidenecke wieder abnimmt, wobei der Anstieg des Freiwinkels entlang der Schneidkante von der einen Schneidenecke aus steiler als von der anderen Schneidenecke aus verläuft. Mit zunehmendem Freiwinkel kann der Keilwinkel der Schneidkante und damit der Schneidwiderstand verkleinert werden. Eine Anpassung an die im Bereich der Schneidenecken auftretenden Schnitt- und Druckkräfte kann dadurch erzielt werden, dass die Schneidkante im Bereich der Schneidenecke einen abgerundeten Verlauf aufweist und dass der Freiwinkel im Verlauf über die Schneidenecke variiert. Weiter hat es sich gezeigt, dass der Schneidkantenabschnitt mit maximalem Freiwinkel zweckmäßig außerhalb der Schneidkantenmitte zwischen zwei Schneidenecken angeordnet ist. Um den Schneidwiderstand zu reduzieren nimmt der Freiwinkel zweckmäßig entlang einem langgestreckten Schneidkantenabschnitt seinen Maximalwert an. Wenn man über die Schneidkantenlänge von einem etwa konstanten Spanwinkel ausgeht, wird der an der Schneidkante zwischen Spanfläche und Freifläche eingeschlossene Keilwinkel entlang der Schneidkante gegenläufig zum Freiwinkel variieren. Dementsprechend wird der Keilwinkel im Abschnitt der Maximalwerte der Schneidkantenhöhe und/oder des Freiwinkels kleiner als im Bereich der Schneidenecken sein.

Eine bevorzugte Ausgestaltung der Erfindung sieht vor, dass die von der Ebene des Stützbodens gemessene Höhe der Schneidkanten von einer Schneidenecke aus in ihrem Verlauf bis zu einem Schneidkantenabschnitt mit maximaler Höhe ansteigt und im weiteren Verlauf bis zur anderen Schneidenecke hin abnimmt. Der Höhenverlauf der Schneidkante zwischen den beiden Schneidenecken wird dabei an die Schnittverhältnisse entlang den Schneidkanten angepasst und ist daher zweckmäßig unsymmetrisch ausgebildet. Vorteilhafterweise ist der Schneidkantenabschnitt mit maximaler Höhe zu einer der beiden Schneidenecken hin verschoben. Außerdem sind die Anstiege der Schneidkante von den beiden Schneidenecken aus zum Schneidkantenabschnitt maximaler Höhe in ihrem Verlauf nichtlinear. Insbesondere kann der Anstieg der Schneidkante von der einen Schneidenecke aus steiler als von der anderen Schneidenecke aus verlaufen. Damit kann Einfluss auf die Zentrierwirkung eines Bohrwerkzeugs beim Anbohrvorgang sowie auf dessen radiale Abdrängung genommen werden. Vorteilhafterweise sind die Anstiegsabschnitte der Schneidkante über einen langgestreckten Schneidkantenabschnitt maximaler Höhe miteinander verbunden.

Solange die Freiflächen durch geometrisch einfache Formen verwirklicht werden können, ist es von Vorteil, wenn die Stützflächen, mit denen sich die Wendeschneidplatten in ihren Plattensitzen abstützen, zumindest partiell durch die Freiflächen der zugehörigen nicht aktiven Schneidkanten gebildet sind. Bei geometrisch komplizierteren Freiflächen ist es jedoch vorteilhaft, wenn die Stützflächen zusammen mit dem Stützboden eine einheitliche Stützpartie bilden, während die Freiflächen mit den Schneidkanten und den Spanflächen eine über eine pyramidenartige Übergangspartie mit der Stützpartie verbundene Schneidpartie bilden. Um trotz größerer Herstellungstoleranzen eine bessere Passgenauigkeit zwischen Wendeschneidplatte und Plattensitz zu erzielen, wird gemäß einer vorteilhaften Ausgestaltung der Erfindung vorgeschlagen, dass die Stützflächen über einen pyramidenartig sich verjüngenden Übergangsabschnitt mit dem Stützboden verbunden sind. Der Stützboden weist dabei zweckmäßig einen quadratischen Umriss auf, während die Stützflächen einen Quader oder Pyramidenstumpf mit quadratischer Grundfläche begrenzen.

Die erfindungsgemäßen Wendeschneidplatten werden bevorzugt als Innenplatten eines Vollbohrers mit mindestens zwei in Radial- und Umfangsabstand voneinander angeordneten, in radialer Richtung sich teilweise überlappenden Plattensitzen eingesetzt. Als Außenplatten eines Vollbohrers mit mindestens zwei im Radial- und Umfangsabstand voneinander angeordneten, in radialer Richtung sich teilweise überlappenden Plattensitzen werden bevorzugt Wendeschneidplatten mit einem wellenförmigen Verlauf der Schneidkanten oder einem wellenförmigen Verlauf der Freiwinkel entlang den Schneidkanten verwendet.

Im Folgenden wird die Erfindung anhand einiger in der Zeichnung in schematischer Weise dargestellten Ausführungsbeispiele näher erläutert. Es zeigen
- Fig. 1a: einen Vollbohrer für Werkzeugmaschinen mit im Wesentlichen quadratischen Wendeschneidplatten in schaubildlicher Darstellung;
- Fig. 1b: eine Draufsicht des Vollbohrers nach Fig. 1 a;
- Fig. 2a bis c: eine schaubildliche Darstellung, eine Draufsicht und eine Seitenansicht einer ersten Wendeschneidplatte, die nicht gemäß der Erfindung ausgebildet ist;
- Fig. 3a bis c: eine schaubildliche Darstellung, eine Seitenansicht und eine Draufsicht einer zweiten Wendeschneidplatte, die gemäß der Erfindung ausgebildet ist;
- Fig. 4a bis c: je einen Schnitt entlang den Schnittlinien A, B und C der Fig. 3c;
- Fig. 5a bis c: eine schaubildliche Darstellung, eine Seitenansicht und eine Draufsicht einer dritten Wendescheidplatte, die gemäß der Erfindung ausgebildet ist;
- Fig. 6a bis c: je einen Schnitt entlang den Schnittlinien A, B und C der Fig. 5c;
- Fig. 7a bis c: eine schaubildliche Darstellung, eine Draufsicht und eine Seitenansicht einer vierten Wendeschneidplatte, die nicht gemäß der Erfindung ausgebildet ist;
- Fig. 7d: einen vergrößerten Ausschnitt aus Fig. 7b;
- Fig. 8a bis c: eine schaubildliche Darstellung, eine Seitenansicht und eine Draufsicht einer fünften Wendeschneiplatte, die nicht gemäß der Erfindung ausgebildet ist;
- Fig. 9a und b: schematische Darstellungen der Wendeschneidplatten eines Bohrwerkzeugs mit um 180° umgeklappter Außenschneidplatte zur Demonstration der Schneidplattenüberlappung.

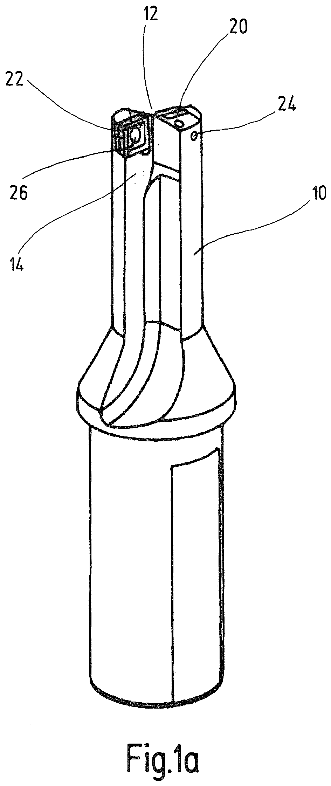

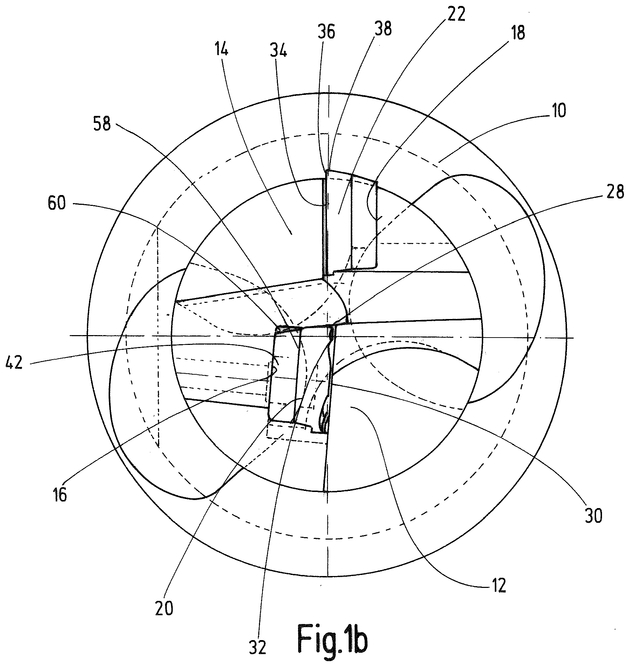

Das in Fig. 1a und b dargestellte Werkzeug ist als Vollbohrer für Werkzeugmaschinen bestimmt. Es weist einen im Wesentlichen zylindrischen Bohrerkörper 10 auf, der mit zwei Spanfördernuten 12, 14 versehen ist. Am stirnseitigen Ende der Spanfördernuten ist je ein Plattensitz 16, 18 zur Aufnahme je einer im Umriss im Wesentlichen quadratischen Wendeschneidplatte 20, 22 vorgesehen. Die Wendeschneidplatten sind mit je einer in eine Gewindebohrung 24 des Bohrerkörpers 10 eingreifenden, nicht dargestellten Senkkopfschraube am Bohrerkörper 10 befestigt. Wie aus Fig. 1b zu ersehen ist, übergreift die innere Wendeschneidplatte 20 mit der inneren Schneidenecke 28 ihrer stirnseitigen aktiven Schneidkante 30 die Bohrerachse 32, während die äußere Wendeschneidplatte 22 mit ihrer aktiven Schneidkante 34 im Bereich der äußeren Schneidenecke 36 mit ihrer äußeren Nebenschneide 38 über den Umfang des Bohrerkörpers 10 übersteht.

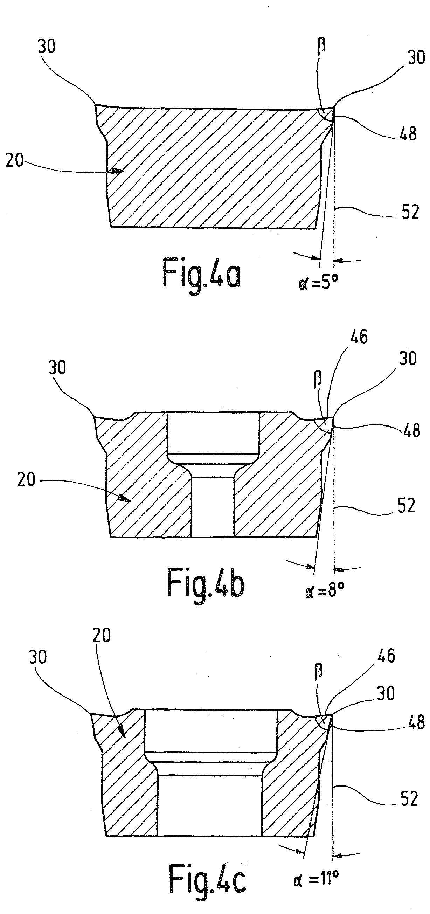

Eine Besonderheit der Erfindung besteht darin, dass vor allem die innere Schneidplatte 20 des Bohrwerkzeugs optimal an die beim Bohrvorgang auftretenden Schnittbedingungen angepasst ist. Die hierfür vorgesehene Wendeschneidplatte 20 ist mit ihrem Stützboden 42 und mindestens zwei der vier über den Stützboden überstehenden seitlichen Stützflächen 44 passgenau in den zugehörigen Plattensitz 16 des Bohrerkörpers 10 eingepasst. Sie weist vier gleichartige, im Abstand über dem Stützboden 42 angeordnete, sich zwischen je zwei Schneidenecken 28', 28" erstreckende Schneidkanten 30 auf, die durch je eine Spanfläche 46 und eine Freifläche 48 unter Einschluss eines Winkels β begrenzt sind und von denen sich beim Bohrvorgang jeweils eine in einer aktiven Einsatzposition befindet. Die Freifläche 48 schließt in jedem Punkt der zugehörigen Schneidkante 30 mit einer zum Stützboden senkrechten Geraden 52 einen Freiwinkel α ein (vgl. Fig. 4a bis c).

Eine Anpassung an die Schnittbedingungen innerhalb des Bohrwerkzeugs erfolgt gemäß der Erfindung vor allem dadurch, dass der Freiwinkel α entlang den Schneidkanten variiert (Figurengruppe 3 und 4).

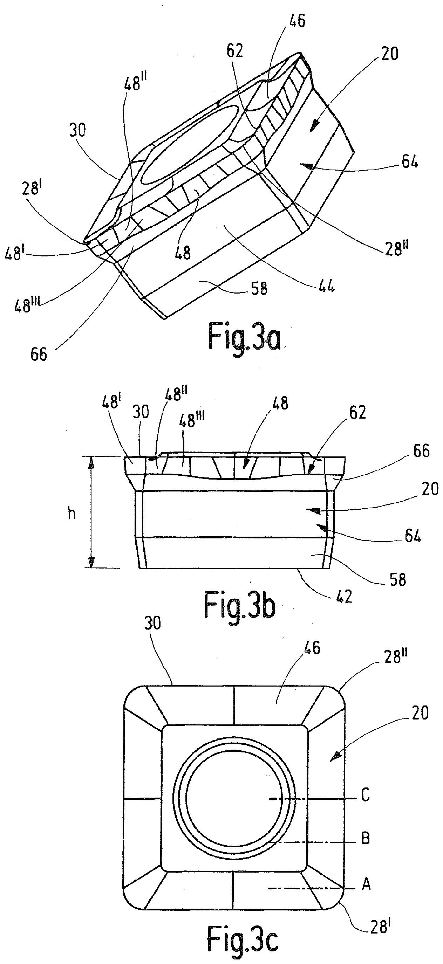

Diese Variation ist in den Fig. 3a und b durch Übergangslinien 62 zwischen verschiedenen Freiflächenabschnitten 48', 48", 48", ... angedeutet. Quantitativ ergibt sich der Freiwinkel aus den in Fig. 4a bis c gezeigten Schnittbildern, deren Position entlang der Schneidkante 30 sich aus Fig. 3c ergibt. Bei dem gezeigten Ausführungsbeispiel beträgt der Freiwinkel α im Bereich der Schneidenecke 28' 5° (Fig. 4a) und steigt entlang der Schneidkante 30 über 8° (Fig. 4b) auf 11° (Fig. 4c) an, um von dort aus zur zweiten Schneidenecke 28" wieder abzunehmen. Da der Spanwinkel entlang der Schneidkante 30 annähernd gleich bleibt, führt der variable Freiwinkel α zu einer entsprechenden Variation im Keilwinkel β. Dementsprechend ist der Keilwinkel im Bereich der Schneidenecken 28', 28" relativ groß, was zu einer Erhöhung der Schneidenstabilität im Eckbereich führt. Zur Mitte hin wird der Keilwinkel β kleiner. Die Schneide wird dort also schärfer, was zu einer Reduzierung der Schnittkräfte führt.

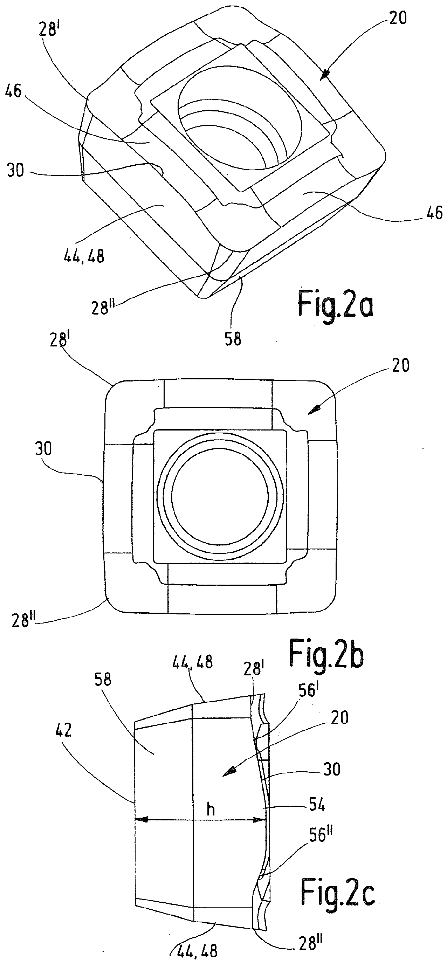

Bei der Figurengruppe 2 handelt es sich nicht um Ausführungsformen der Erfindung, sondern um ein Beispiel, das das Verständnis der Erfindung im Zusammenhang mit der Figurengruppe 5 und 6 erleichtern soll. Bei der Wendeschneidplatte nach Fig. 2a bis c steigt die von der Ebene des Stützbodens 42 aus gemessene Höhe h der Schneidkanten 30 von einer ersten Schneidenecke 28' aus in ihrem Verlauf bis zu einem Schneidkantenabschnitt 54 mit maximaler Höhe an und nimmt im weiteren Verlauf bis zur zweiten Schneidenecke 28" ab. Wie insbesondere aus Fig. 2c zu ersehen ist, ist der Höhenverlauf der Schneidkante 30 unsymmetrisch ausgebildet. Der im Maximum befindliche Schneidkantenabschnitt 54 ist zur Schneidenecke 28" hin verschoben. Auch die Anstiege der Schneidkante 30 zum Schneidkantenabschnitt 54 maximaler Höhe verlaufen nichtlinear. Sie sind von der Schneidenecke 28" aus steiler als von der zweiten Schneidenecke 28' aus. Der Schneidkantenabschnitt 54 maximaler Höhe befindet sich zwischen den beiden Anstiegsabschnitten 56', 56"; er ist langgestreckt (vgl. Fig. 2c). Die Ausführungsvariante nach Fig. 2a bis c weist einen im Verlauf der Schneidkante 30 zwischen den Schneidenecken konstanten Freiwinkel α auf. Dementsprechend ergänzen sich die Freiflächen 48 über die abgerundeten Plattenecken zu einem einfachen pyramidenstumpfartigen Körper. Die Freiflächen 48 eignen sich daher zugleich als Stützflächen 44 für die Abstützung im Plattensitz 16. Die Stützflächen 44 sind über einen pyramidenartig verjüngenden Übergangsabschnitt 58 mit dem Stützboden 42 verbunden. Der Übergangsabschnitt 58 lässt zum Plattensitz hin noch etwas Freiraum 60, um die Anforderungen an die Herstellungstoleranzen des Plattensitzes und der Wendeschneidplatten so klein wie möglich zu halten.

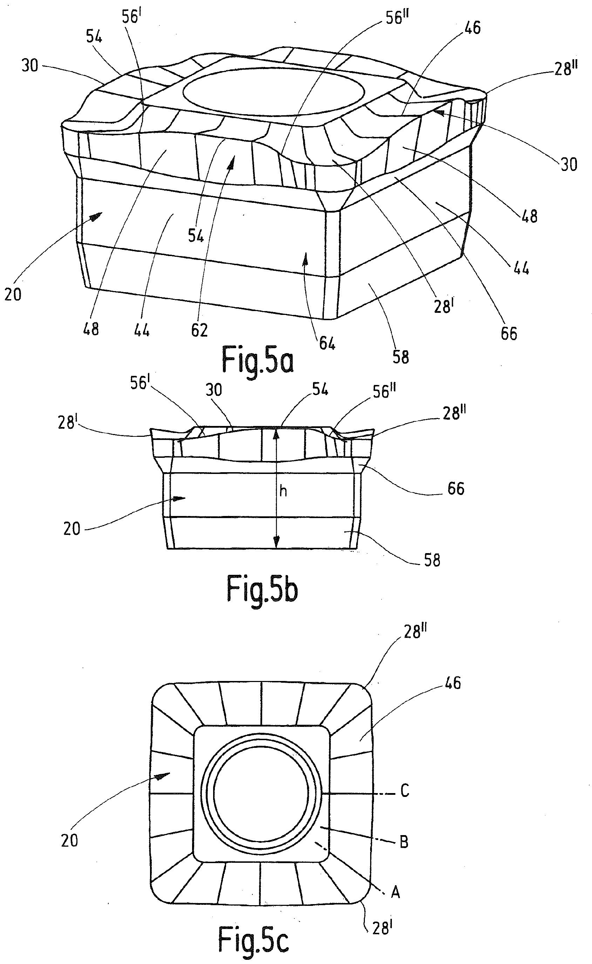

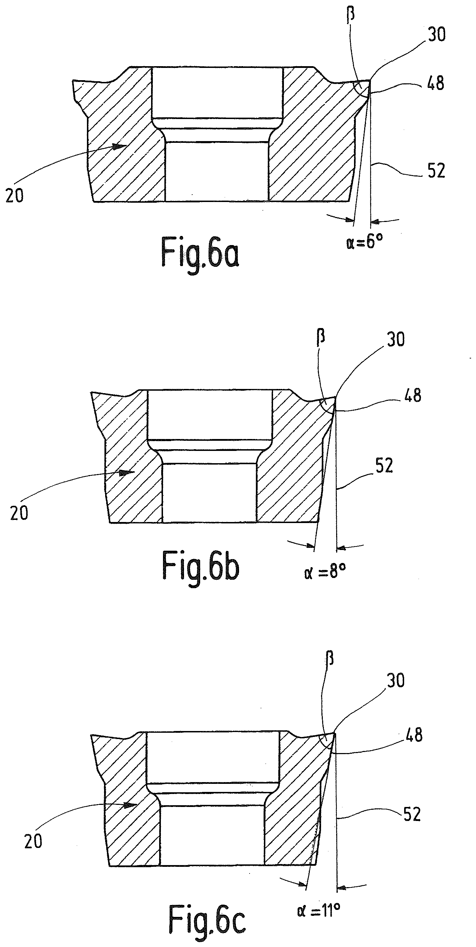

Das in den Figurengruppen 5 und 6 gezeigte Ausführungsbeispiel macht von beiden Variationsparametern Freiwinkel α und Schneidkantenhöhe h entlang den Schneidkanten 30 Gebrauch. Wie vor allem in den Fig. 5a und b erkennbar ist, variiert bei der dort gezeigten Wendeschneidplatte die Schneidkantenhöhe über ihre Länge ähnlich wie im Falle der Wendeschneidplatte nach Fig. 2a. In Fig. 6a bis c ist in Verbindung mit Fig. 5c erkennbar, dass zugleich auch der Freiwinkel α von 6° im Bereich der Schneidenecke 28' über 8° im Anstiegsbereich auf 11° im Schneidenabschnitt 54 maximaler Höhe ansteigt. Im weiteren Verlauf der Schneidkante 30 nimmt der Freiwinkel α zur zweiten Schneidenecke 28" hin wieder ab. Da die Freiflächen 48 mit variablem Freiwinkel α über die Schneidkantenlänge eine komplizierte geometrische Gestalt aufweisen, sind sie nicht als Stützflächen innerhalb eines geometrisch einfachen Plattensitzes geeignet. Dementsprechend ist sowohl bei der Ausführungsvariante nach Fig. 3a bis c als auch bei der Ausführungsvariante nach Fig. 5a bis c die Wendeschneidplatte 20 in eine Schneidpartie 62 und eine Stützpartie 64 der Höhe nach unterteilt. Die Stützpartie 64 weist glatte Stützflächen 44 auf, die sich über die abgerundeten Plattenecken zu einem quaderförmigen oder pyramidenstumpfförmigen Körper ergänzen. Zwischen der Schneidpartie 62 und der Stützpartie 64 befindet sich ein pyramidenstumpfförmiger Übergangsabschnitt 66, während zum Stützboden 42 hin ein weiterer Übergangsabschnitt 58 zur Vermeidung von Toleranzproblemen für den notwendigen Freiraum 60 im Plattensitz 36 sorgt.

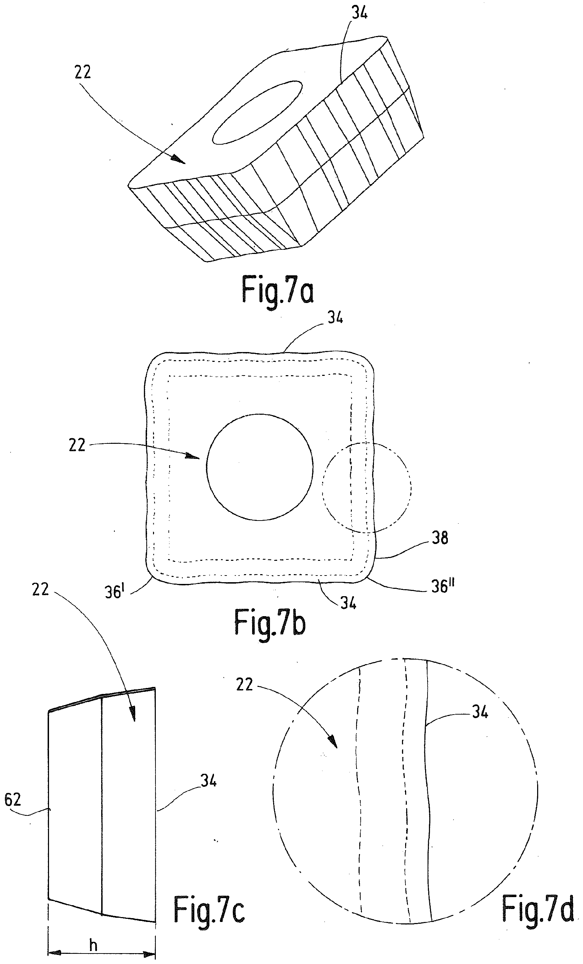

Die drei vorstehend beschriebenen Wendeschneidplatten eignen sich vor allem als innere Wendeschneidplatten 20 in einem Bohrwerkzeug, während die in der Figurengruppe 7 gezeigte Wendeschneidplatte für den Einsatz als äußere Wendeschneidplatte 22 im Bohrwerkzeug konzipiert ist. Die Figurengruppe 7 soll lediglich dem Verständnis der Erfindung dienen, bildet jedoch ebenso wie die Figurengruppe 8 keine Ausführungsform der Erfindung. Bei der Wendeschneidplatte nach Fig. 7a bis e weisen die Schneidkanten 30 einen über ihre Länge konstanten Abstand h vom Stützboden 42 auf, während der Freiwinkel α wellenförmig variiert. Die Schneidenecken 36', 36" sind unsymmetrisch gerundet, so dass der radiusbestimmende Teil der abgerundeten Schneidenecken der Hauptschneide 34 in eine langgezogene Nebenschneide 38 übergeht. Mit diesen topographischen Maßnahmen wird vor allem die Spanbildung und die Güte der Bohrung verbessert und zugleich eine Stabilisierung der Plattenecken 36', 36" erzielt.

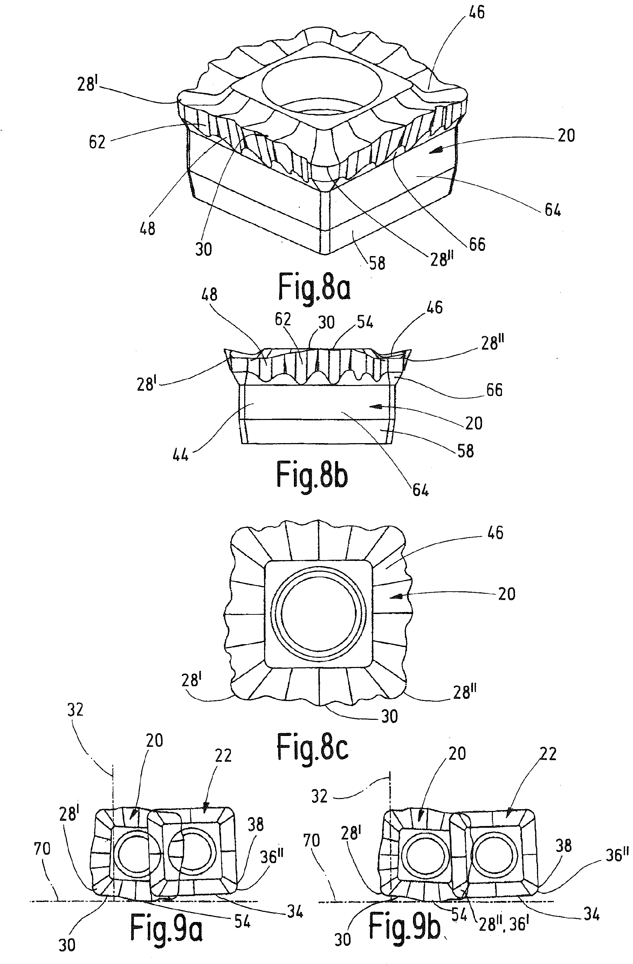

Bei der in Fig. 8a bis c gezeigten Wendeschneidplatte ist die wellenförmige Variation des Freiwinkels α mit der Höhenvariation der Schneidkanten 30 mit Bezug auf den Stützboden 42 kombiniert. Diese Maßnahmen führen vor allem zu einer Verbesserung der Spanbildung sowohl im Bereich der Innenplatte 20 als auch der Außenplatte 22 eines Bohrwerkzeugs.

In den Fig. 9a und b sind eine Innenplatte 20 und eine Außenplatte 22 in einem Bohrwerkzeug miteinander kombiniert, wobei die Außenplatte 22 zur Veranschaulichung der beiderseitigen Überlappung um etwa 180° in die Ebene der Innenplatte 20 geklappt ist. In beiden Bohrwerkzeugen werden die gleichen Wendeschneidplatten verwendet. Im Falle der Fig. 9a sind die Platten näher zusammengerückt als in Fig. 9b. Dementsprechend ist die in Fig. 9a gezeigte Konfiguration zum Bohren kleinerer Durchmesser als die Konfiguration nach Fig. 9b bestimmt. Die strichpunktierte Linie 32 kennzeichnet jeweils die Bohrerachse, während die strichpunktierte Linie 70 die Werkstückoberfläche beim Anbohrvorgang andeutet. Aus den Fig. 9a und b ist erkennbar, dass die Innenplatte 20 gegenüber der Außenplatte 22 axial vorgesetzt ist und dass der innere Teil der Außenplatte 22 durch den äußeren Teil der Innenplatte 20 abgeschattet ist. Dementsprechend wird die innere Ecke 36' der aktiven Schneidkante 24 der Außenplatte 22 durch die Außenecke 28" der inneren Schneidplatte 20 gegen einen Verschleiß geschützt. Dies ist notwendig, weil an der Außenplatte 22 die radiusbestimmende Außenecke 36" mit ihrer Nebenschneide 38 unterhalb der Bohrung am Werkstück in Eingriff steht und daher auf der Seite der inneren Schneidenecken 36', 36" in einem späteren Wendevorgang geschützt werden muss.

Weiter lässt sich aus Fig. 9a und b erkennen, dass der Schneidkantenabschnitt 54 beim Bohrvorgang für die Erzeugung einer Vorspur im Werkstück 70 sorgt und dadurch maßgeblich zur Zentrierung des Werkzeugs im Werkstück beiträgt. Die innere Schneidkante 28' der inneren Wendeschneidplatte 20 übergreift die Bohrerachse 32 und trägt damit zum Schneidvorgang nicht bei. Diese Ecke wird vielmehr für einen späteren Wendevorgang aufgrund ihrer Anordnung im Bohrer gegen einen Verschleiß abgeschirmt.

## Patentansprüche

1. Wendeschneidplatte für Vollbohrer mit einem Stützboden (42), mit vier über den Stützboden überstehenden seitlichen Stützflächen (44) und mit vier gleichartigen, im Abstand über dem Stützboden (42) angeordneten, sich zwischen je zwei Schneidenecken (28', 28") erstreckenden Schneidkanten (30), die durch je eine Spanfläche (46) und eine Freifläche (48) begrenzt sind und von denen sich beim Bohrvorgang jeweils eine in einer aktiven Einsatzposition befindet, bei welcher die Freifläche (48) in jedem Punkt der zugehörigen Schneidkante (30) mit einer zum Stützboden (42) senkrechten Geraden (52) einen Freiwinkel (α) einschließt, wobei der Freiwinkel (α) entlang der Schneidkante (30) variiert, **dadurch gekennzeichnet, dass** der Freiwinkel (α) von einem kleineren Wert, der z. B. 5° ist, im Bereich der Schneidenecke (28') bis zu einem Maximalwert, der z.B. 11° ist, ansteigt und im weiteren Verlauf der Schneidkante (30) bis zur anderen Schneidenecke (28") abnimmt, und dass der Anstieg des Freiwinkels (α) von einer der Schneidenecken (28") aus steiler als von der anderen Schneidenecke (28') aus verläuft.

2. Wendeschneidplatte nach Anspruch 1, **dadurch gekennzeichnet, dass** die Schneidkante (30) im Bereich der Schneidenecken (28', 28") einen abgerundeten Verlauf aufweist, und dass der Freiwinkel (α) im Verlauf über die Schneidenecke variiert.

3. Wendeschneidplatte nach Anspruch 1 oder 2, **dadurch gekennzeichnet, dass** der Schneidkantenabschnitt (54) mit maximalem Freiwinkel (α) außerhalb der Schneidkantenmitte angeordnet ist.

4. Wendeschneidplatte nach einem der Ansprüche 1 bis 3, **dadurch gekennzeichnet, dass** der Freiwinkel (α) entlang einem langgestreckten Schneidkantenabschnitt (54) seinen Maximalwert einnimmt.

5. Wendeschneidplatte nach einem der Ansprüche 1 bis 4, **dadurch gekennzeichnet, dass** der an der Schneidkante (30) zwischen Spanfläche (46) und Freifläche (48) eingeschlossene Keilwinkel (β) entlang der Schneidkante (30) variiert.

6. Wendeschneidplatte nach Anspruch 5, **dadurch gekennzeichnet, dass** der Keilwinkel (β) im Schneidkantenabschnitt (54) maximaler Schneidkantenhöhe (h) und/oder maximalen Freiwinkels (α) kleiner ist als im Bereich der Schneidenecken (28', 28").

7. Wendeschneidplatte nach einem der Ansprüche 1 bis 6, **dadurch gekennzeichnet, dass** die von der Ebene des Stützbodens (42) aus gemessene Höhe (h) der Schneidkanten (30) über deren Länge variiert.

8. Wendeschneidplatte nach Anspruch 7, **dadurch gekennzeichnet, dass** die von der Ebene des Stützbodens (42) aus gemessene Höhe (h) der Schneidkanten (30) von einer Schneidenecke (28') aus in ihrem Verlauf bis zu einem Schneidkantenabschnitt (54) maximaler Höhe (h) ansteigt und im weiteren Verlauf bis zur anderen Schneidenecke (28") hin abnimmt.

9. Wendeschneidplatte nach Anspruch 8, **dadurch gekennzeichnet, dass** der Höhenverlauf der Schneidkanten (30) zwischen den beiden Schneidenecken (28', 28") unsymmetrisch ausgebildet ist.

10. Wendeschneidplatte nach Anspruch 8 oder 9, **dadurch gekennzeichnet, dass** der Schneidkantenabschnitt (54) maximaler Höhe (h) zu einer der beiden Schneidenecken hin verschoben ist.

11. Wendeschneidplatte nach einem der Ansprüche 7 bis 10, **dadurch gekennzeichnet, dass** die Anstiege jeder Schneidkante (30) von den Schneidenecken (28', 28") aus zum Schneidkantenabschnitt (54) maximaler Höhe (h) nichtlinear verlaufen.

12. Wendeschneidplatte nach einem der Ansprüche 7 bis 11, **dadurch gekennzeichnet, dass** der Anstieg einer jeden Schneidkante (30) von der einen Schneidenecke (28") aus steiler als von der anderen Schneidenecke (28') aus verläuft.

13. Wendeschneidplatte nach einem der Ansprüche 7 bis 12, **dadurch gekennzeichnet, dass** die Anstiegsabschnitte (56', 56") der Schneidkante (30) über einen langgestreckten Schneidkantenabschnitt (54) maximaler Höhe miteinander verbunden sind.

14. Wendeschneidplatte nach einem der Ansprüche 1 bis 13, **dadurch gekennzeichnet, dass** die Stützflächen (44) zumindest partiell durch die Freiflächen (48) der zugehörigen nichtaktiven Schneidkanten (30) gebildet sind.

15. Wendeschneidplatte nach einem der Ansprüche 1 bis 14, **dadurch gekennzeichnet, dass** die Stützflächen (44) zusammen mit dem Stützboden (42) eine Stützpartie (64) bilden, während die Freiflächen (48) mit den Schneidkanten (30) und den Spanflächen (46) eine über einen vorzugsweise pyramidenartigen Übergangsabschnitt (66) mit der Stützpartie (64) verbundene Schneidpartie (62) bilden.

16. Wendeschneidplatte nach Anspruch 14 oder 15, **dadurch gekennzeichnet, dass** die Stützflächen (44) über einen sich pyramidenartig verjüngenden Übergangsabschnitt (58) mit dem Stützboden (42) verbunden sind.

17. Wendeschneidplatte nach einem der Ansprüche 14 bis 16, **dadurch gekennzeichnet, dass** der Stützboden (42) einen quadratischen Umriss aufweist.

18. Wendeschneidplatte nach einem der Ansprüche 14 bis 17, **dadurch gekennzeichnet, dass** die Stützflächen (44) einen Quader oder einen Pyramidenstumpf mit quadratischer Grundfläche begrenzen.

19. Verwendung der Wendeschneidplatte nach einem der Ansprüche 1 bis 18 als Innenplatte (20) eines Vollbohrers mit mindestens zwei im Radial- und Umfangsabstand voneinander angeordneten, in radialer Richtung sich teilweise überlappenden Plattensitzen (36).

## Claims

1. An indexable insert for solid drills, having a supporting base (42), having four lateral supporting surfaces (44) projecting beyond the supporting base, and having four identical cutting edges (30) which are arranged at a distance above the supporting base (42), extend between in each case two cutting-edge corners (28, 28"), are bounded by a respective tool face (46) and a tool flank (48) and of which in each case one is located in an active use position during the drilling operation, in the case of which the tool flank (48), at each point of the associated cutting edge (30), encloses a clearance angle (α) with a straight line (52) perpendicular to the supporting base (42), the clearance angle (α) varying along the cutting edge (30), **characterized in that** the clearance angle (α) increases from a relatively small value of for example 5° in the region of the cutting-edge corner (28') to a maximum value of for example 11 and decreases over the rest of the cutting edge (30) as far as the other cutting-edge corner (28"), and **in that** the increase in the clearance angle (α) from one of the cutting-edge corners (28") is more pronounced than from the other cutting-edge corner (28').

2. The indexable insert as claimed in claim 1, **characterized in that** the cutting edge (30) is rounded in the region of the cutting-edge corners (28', 28"), and **in that** the clearance angle (α) varies over the course of the cutting-edge corner.

3. The indexable Insert as claimed in claim 1 or 2, **characterized in that** the cutting-edge portion (54) with maximum clearance angle (α) is arranged outside the cutting-edge center.

4. The indexable insert as claimed in one of claims 1 to 3, **characterized in that** the clearance angle (α) assumes its maximum value along an elongate cutting-edge portion (54).

5. The indexable insert as claimed in one of claims 1 to 4, **characterized in that** the wedge angle (β) enclosed along the cutting edge (30) between the tool face (46) and tool flank (48) varies along the cutting edge (30).

6. The indexable insert as claimed in claim 5, **characterized in that** the wedge angle (β) in the cutting-edge portion (54) of maximum cutting-edge height (h) and/or maximum clearance angle (α) is smaller than in the region of the cutting-edge corners (28', 28").

7. The indexable insert as claimed in one of claims 1 to 6, **characterized in that** the height (h) of the cutting edges (30), as measured from the plane of the supporting base (42), varies over the length of the cutting edges.

8. The indexable insert as claimed in claim 7, **characterized in that** the height (h) of the cutting edges (30), as measured from the plane of the supporting base (42), ascends from one cutting-edge corner (28') en route to a cutting-edge portion (54) of maximum height (h) and decreases as the other cutting-edge corner (28") is approached.

9. The indexable insert as claimed in claim 8, **characterized in that** the height profile of the cutting edges (30) between the two cutting-edge corners (28', 28") is asymmetrical.

10. The indexable insert as claimed in claim 8 or 9, **characterized in that** the cutting-edge portion (54) of maximum height (h) is displaced in the direction of one of the two cutting-edge corners

11. The indexable insert as claimed in one of claims 7 to 10, **characterized in that** the ascents of each cutting edge (30) from the cutting-edge corners (28', 28") to the cutting-edge portion (54) of maximum height (h) are non-linear.

12. The indexable insert as claimed in one of claims 7 to 11, **characterized in that** the ascent of each cutting edge (30) from the one cutting-edge corner (28") is steeper than from the other cutting-edge corner (28').

13. The indexable insert as claimed in one of claims 7 to 12, **characterized in that** the ascent portions (56', 56") of the cutting edge (30) are connected to one another via an elongate cutting-edge portion (54) of maximum height.

14. The indexable insert as claimed in one of claims 1 to 13, **characterized in that** the supporting surfaces (44) are formed, at least in part, by the tool flanks (48) of the associated non-active cutting edges (30).

15. The indexable insert as claimed in one of claims 1 to 14, **characterized in that** the supporting surfaces (44) together with the supporting base (42) form a supporting portion (64), while the tool flanks (48) with the cutting edges (30) and the tool faces (46) form a cutting portion (62), which is connected to the supporting portion (64) via a preferably pyramidal transition portion (66).

16. The indexable insert as claimed in claim 14 or 15, **characterized in that** the supporting surfaces (44) are connected to the supporting base (42) via a pyramidally tapering transition portion (58).

17. The indexable insert as claimed in one of claims 14 to 16, **characterized in that** the supporting base (42) has a square outline.

18. The indexable insert as claimed in one of claims 14 to 17, **characterized in that** the supporting surfaces (44) bound a cuboid or a truncated pyramid with a square surface area.

19. The use of the indexable insert as claimed in one of claims 1 to 18 as an inner insert (20) of a solid drill having at least two radially and circumferentially spaced-apart insert seats (36) which partially overlap in the radial direction.

## Revendications

1. Plaque de coupe réversible pour un appareil d'alésage plein diamètre avec un fond d'appui (42), avec quatre surfaces d'appui latérales (44) surplombant le fond d'appui et avec quatre arêtes de coupe (30) de même type s'étendant entre respectivement deux coins de coupe (28', 28") et agencées avec un espacement au-dessus du fond d'appui (42), lesdits bords étant délimités par respectivement une surface de dégagement (46) et une surface de dépouille (48) et respectivement l'une d'entre eux se trouvant, lors de l'étape d'alésage, dans une position d'utilisation active dans laquelle la surface de dépouille (48) forme un angle de dépouille (α) avec une droite (52) perpendiculaire au fond d'appui (42), en tout point du bord de coupe (30) associé, dans laquelle l'angle de dépouille (α) varie le long du bord de coupe (30), **caractérisée en ce que** l'angle de dépouille (α) augmente d'une valeur plus petite, par exemple 5°, dans le secteur du coin de coupe (28') jusqu'à une valeur maximale, par exemple 11°, et diminue pour un autre tracé du bord de coupe (30) jusqu'à un autre coin de coupe (28"), et la pente de l'angle de dépouille (α) à partir d'un des coins de coupe (28") est plus inclinée qu'à partir de l'autre coin de coupe (28').

2. Plaque de coupe réversible selon la revendication 1, **caractérisée en ce que** le bord de coupe (30) présente dans le secteur des coins de coupe (28', 28") un tracé arrondi, et l'angle de dépouille (α) varie en passant par les coins de coupe.

3. Plaque de coupe réversible selon la revendication 1 ou 2, **caractérisée en ce que** la section de bord de coupe (54) est agencée à l'extérieur du milieu de bord de coupe avec un angle de dépouille (α) maximale.

4. Plaque de coupe réversible selon l'une quelconque des revendications 1 à 3, **caractérisée en ce que** l'angle de dépouille (α) prend sa valeur maximale le long d'une section de bord de coupe (54) oblongue.

5. Plaque de coupe réversible selon l'une quelconque des revendications 1 à 4, **caractérisée en ce que** l'angle de taillant (β) formé entre la surface de dégagement (46) et la surface de dépouille (48) au niveau du bord de coupe (30) varie le long du bord de coupe (30).

6. Plaque de coupe réversible selon la revendication 5, **caractérisée en ce que** l'angle de taillant (β) dans la section de bord de coupe (54) de hauteur de bord de coupe (h) maximale et/ou d'angle de dépouille (α) maximal est inférieur à ce qu'il est dans le secteur des coins de coupe (28', 28").

7. Plaque de coupe réversible selon l'une quelconque des revendications 1 à 6, **caractérisée en ce que** la hauteur (h), mesurée à partir du plan du fond d'appui (42), des bords de coupe (30) varie sur toute la longueur de ceux-ci.

8. Plaque de coupe réversible selon la revendication 7, **caractérisée en ce que** la hauteur (h), mesurée à partir du plan du fond d'appui (42), des bords de coupe (30) augmente sur son tracé d'un coin de coupe (28') jusqu'à une section de bord de coupe (54) de hauteur (h) maximale, et diminue par la suite jusqu'à l'autre coin de coupe (28").

9. Plaque de coupe réversible selon la revendication 8, **caractérisée en ce que** le tracé de hauteur des bords de coupe (30) entre les deux coins de coupe (28', 28") est réalisé de manière non symétrique.

10. Plaque de coupe réversible selon la revendication 8 ou 9, **caractérisée en ce que** la section de bord de coupe (54) de hauteur (h) maximale est décalée par rapport à un des deux coins de coupe.

11. Plaque de coupe réversible selon l'une quelconque des revendications 7 à 10, **caractérisée en ce que** les pentes de chaque bord de coupe (30) à partir des coins de coupe (28', 28") jusqu'à la section de bord de coupe (54) de hauteur (h) maximale ne se font pas de manière linéaire.

12. Plaque de coupe réversible selon l'une quelconque des revendications 7 à 11, **caractérisée en ce que** la pente d'un bord de coupe (30) respectif à partir d'un coin de coupe (28") est plus inclinée qu'à partir de l'autre coin de coupe (28').

13. Plaque de coupe réversible selon l'une quelconque des revendications 7 à 12, **caractérisée en ce que** les sections inclinées (56', 56") du bord de coupe (30) sont reliées l'une à l'autre par l'intermédiaire d'une section de bord de coupe (54) oblongue de hauteur maximale.

14. Plaque de coupe réversible selon l'une quelconque des revendications 1 à 13, **caractérisée en ce que** les surfaces d'appui (44) sont formées au moins partiellement grâce aux surfaces de dépouille (48) des bords de coupe (30) non actifs associés.

15. Plaque de coupe réversible selon l'une quelconque des revendications 1 à 14, **caractérisée en ce que** les surfaces d'appui (44) forment une partie d'appui (64) en commun avec le fond d'appui (42), pendant que les surfaces de dépouille (48) forment avec les bords de coupe (30) et les surfaces de dégagement (46) une partie coupe (62) reliée à la partie d'appui (64) par l'intermédiaire d'une section de transition (66) de manière préférée de type pyramidal.

16. Plaque de coupe réversible selon la revendication 14 ou 15, **caractérisée en ce que** les surfaces d'appui (44) sont reliées au fond d'appui (42) par l'intermédiaire d'une section de transition (58) convergeant à la manière d'une pyramide.

17. Plaque de coupe réversible selon l'une quelconque des revendications 14 à 16, **caractérisée en ce que** le fond d'appui (42) présente un contour quadratique.

18. Plaque de coupe réversible selon l'une quelconque des revendications 14 à 17, **caractérisée en ce que** les surfaces d'appui (44) délimitent un parallélépipède rectangle ou un tronc de pyramide ayant une base quadratique.

19. Utilisation de la plaque de coupe réversible selon l'une quelconque des revendications 1 à 18 en tant que plaque interne (20) d'un appareil d'alésage plein diamètre avec au moins deux sièges de plaque (36) se chevauchant partiellement dans la direction radiale et agencés avec un espacement radial et un espacement périphérique les uns par rapport aux autres.
